# EUROPEAN PATENT APPLICATION

(11) **EP 3 557 512 A1**
(43) Date of publication of application: **23.10.2019**
(21) Application number: 19168657.5
(22) Date of filing: 11.04.2019
(51) Int. Cl.: G06Q 20/20, G07G 1/00, G07G 1/01

(54) **APPARATUS AND METHOD FOR REGISTERING COMMODITY INFORMATION**

(30) Priority: 12.04.2018 JP 2018076515
(71) Applicant: Toshiba Tec Kabushiki Kaisha, 141-8562 Tokyo (JP)
(72) Inventor: Mihara, Hidemi, Tokyo, 141-8562 (JP)
(74) Representative: Hoffmann Eitle

(57) **Abstract**

A commodity registration apparatus comprises a commodity reader configured to identify a code symbol on an item and a commodity designation module providing a display screen including a plurality of buttons corresponding to items lacking a code symbol. A registration module is configured to register items according to code symbols identified by the commodity reader or as designated by a selection of a button from the plurality of buttons provided on the display screen. A notification instruction module is configured to instruct a notification module to signal a registration of commodity information for each item registered by the registration module regardless of the item identification/designation method.

## Description

### CROSS-REFERENCE TO RELATED APPLICATION

This application is based upon and claims the benefit of priority from Japanese Patent Application No. 2018-076515, filed on April 12, 2018, the entire contents of which are incorporated herein by reference.

### FIELD

Embodiments described herein relate generally to an apparatus and a method for registering commodity information.

### BACKGROUND

In a retail store, such as a supermarket or a convenience store, a self-service checkout apparatus, such as disclosed in Japanese Unexamined Patent Application Publication No. 2017-174474, permitting a customer to perform some or all of the operations relating to commodity registration can be installed.

In such a self-service checkout apparatus, a customer presses a button or key associated with the commodity being purchased or holds the commodity over a scanner to register commodity information for the sales transaction.

In such a self-service checkout apparatus, a commodity can be registered by reading a code symbol (for example, a barcode) on the commodity with a scanner. For any commodity to which a code symbol has not been attached, the commodity can be registered by pressing a button associated with the identity of the commodity. In order to improve checkout operations, the self-service checkout apparatus issues a notification with light and/or sound when a code symbol is scanned by the scanner. When a commodity selection button is pressed, the self-service checkout apparatus also issues a notification with sound.

However, this notification sound or light does not necessarily indicate that the commodity information is correctly registered. For example, there is a possibility that a customer appears to registers one type of commodity fraudulently by scanning a code symbol attached to a cheaper commodity rather than the appropriate code symbol. There is also a possibility that the customer registers a commodity unfairly by pressing a commodity choice button associated with a cheaper commodity.

### SUMMARY OF THE INVENTION

One of the objects of the present invention is to improve prior art techniques and overcome at least some of the prior art problems as for instance above illustrated.

According to a first aspect of the invention, it is provided a commodity registration apparatus, comprising: a commodity reader configured to identify a code symbol on an item; a commodity designation module providing a display screen including a plurality of buttons corresponding to items lacking a code symbol; a registration module configured to register items according to code symbols identified by the commodity reader or as designated by a selection of a button from the plurality of buttons provided on the display screen by the commodity designation module; and a notification instruction module configured to instruct a notification module to signal a registration of commodity information for each item registered by the registration module.

Optionally, in the commodity registration apparatus according to the first aspect of the invention, the notification module is configured to signal in a different format according to whether the registration module registers an item according to code symbol identified by the commodity reader or designated by selection of a button in the plurality of buttons on the display screen.

Optionally, in the commodity registration apparatus according to the first aspect of the invention, the notification module comprises an illumination module on the commodity registration apparatus and the different format is a different illumination color for the illumination module.

Optionally, in the commodity registration apparatus according to the first aspect of the invention, the notification module comprises an illumination module disposed on an attendant apparatus spaced from the commodity registration apparatus and the different format is a different illumination color for the illumination module.

Optionally, in the commodity registration apparatus according to the first aspect of the invention, the notification module comprises an illumination module on the commodity registration apparatus.

Optionally, in the commodity registration apparatus according to the first aspect of the invention, the notification module comprises an illumination module disposed on an attendant apparatus spaced from the commodity registration apparatus.

Optionally, in the commodity registration apparatus according to the first aspect of the invention, the notification instruction module instructs the notification module to maintain the signal for a predetermined period of time.

Optionally, in the commodity registration apparatus according to the first aspect of the invention, the commodity reader is a fixed scanner.

Optionally, in the commodity registration apparatus according to the first aspect of the invention, the commodity reader is a hand-held scanner.

Optionally, in the commodity registration apparatus according to the first aspect of the invention, the commodity designation module comprises: a touch panel on the display screen; and a storage device storing a predetermined list of items lacking a code symbol.

Optionally, in the commodity registration apparatus according to the first aspect of the invention, the plurality of buttons are provided on the display screen according to a generic objection recognition processing performed on an image of an item captured by the commodity reader.

According to a second aspect of the invention, it is provided a self-service point of sale terminal for registering items, comprising: a commodity reader configured to identify a code symbol on an item in a sales transaction; a display including a touch panel; and a controller configured to: display a display screen on the display, the display screen including a plurality of buttons corresponding to items lacking a code symbol; register items in the sales transaction according to code symbols identified by the commodity reader or according to a user selection of a button from the plurality of buttons; and output a notification signal for each registration of an item in the sales transaction.

Optionally, the self-service point of sale terminal according to the second aspect of the invention further comprises an illumination module configured to receive the notification signal and illuminate according to the notification signal.

Optionally, in the self-service point of sale terminal according to the second aspect of the invention, the notification signal specifies whether the item in the registration was identified by the commodity reader or designated by the user selection of a button and the illumination module illuminates with a different color according to whether the item in the registration was identified by the commodity reader or designated by the user selection of a button.

Optionally, in the self-service point of sale terminal according to the second aspect of the invention, the notification signal specifies whether the item in the registration was identified by the commodity reader or designated by the user selection of a button.

Optionally, in the self-service point of sale terminal according to the second aspect of the invention, the notification signal is supplied to an attendant terminal via a network connection.

Optionally, the self-service point of sale terminal according to the second aspect of the invention further comprises a light emitting section mounted on a pole, wherein the notification signal causes a lamp on the commodity reader to illuminate and a lamp of the light emitting section to illuminate.

According to a third aspect of the invention, it is provided a method for registering items in a sales transaction, comprising: registering an item in a sales transaction using a commodity reader to identify a code symbol on the item or receiving a user selection to designate the item via a display screen including a plurality of buttons corresponding to items lacking a code symbol; and instructing a notification module to signal a registration of commodity information for each item registered by the registration module.

Optionally, in the method according to the third aspect of the invention, the notification module comprises a lamp.

Optionally, in the method according to the third aspect of the invention, the color emitted by the lamp is different according to whether the item is registered using the commodity reader or by user selection via the display screen.

### DESCRIPTION OF THE DRAWINGS

Fig. 1 depicts an external appearance of a self-service POS terminal according to an embodiment.
Fig. 2 depicts a hardware configuration of a self-service POS terminal.
Fig. 3 depicts a hardware configuration of a scanner.
Fig. 4 depicts functional components of a self-service POS terminal.
Fig. 5 depicts a selection registration screen displayed at the time of registration for selecting a commodity.
Fig. 6 depicts a reading registration screen displayed when a code symbol is read.
Fig. 7 is a flowchart of registration processing and notification processing performed by a self-service POS terminal according to an embodiment.

### DETAILED DESCRIPTION

In accordance with one embodiment, a commodity registration apparatus comprises a commodity reader configured to identify a code symbol on an item and a commodity designation module providing a display screen including a plurality of buttons corresponding to items lacking a code symbol. A registration module is configured to register items according to code symbols identified by the commodity reader or as designated by a selection of a button from the plurality of buttons provided on the display screen. A notification instruction module is configured to instruct a notification module to signal a registration of commodity information for each item registered by the registration module.

Hereinafter, an example of a self-service checkout apparatus according to the present disclosure is described with reference to the accompanying drawings. The self-service checkout apparatus (also referred to as a self-service POS terminal) according to the present example would be installed in a retail store such as a supermarket. A customer who purchases a commodity can operate the self-service POS terminal to register items being purchased by himself/herself to perform checkout. A self-service checkout apparatus is an example of a commodity information registration apparatus. The example embodiments described below are presented for purposes of explanation of various aspects of the present disclosure and are not intended to limit the configurations, specifications, and the like of all possible embodiments of the present disclosure.

### (Description of Overall Configuration of Self-service POS Terminal)

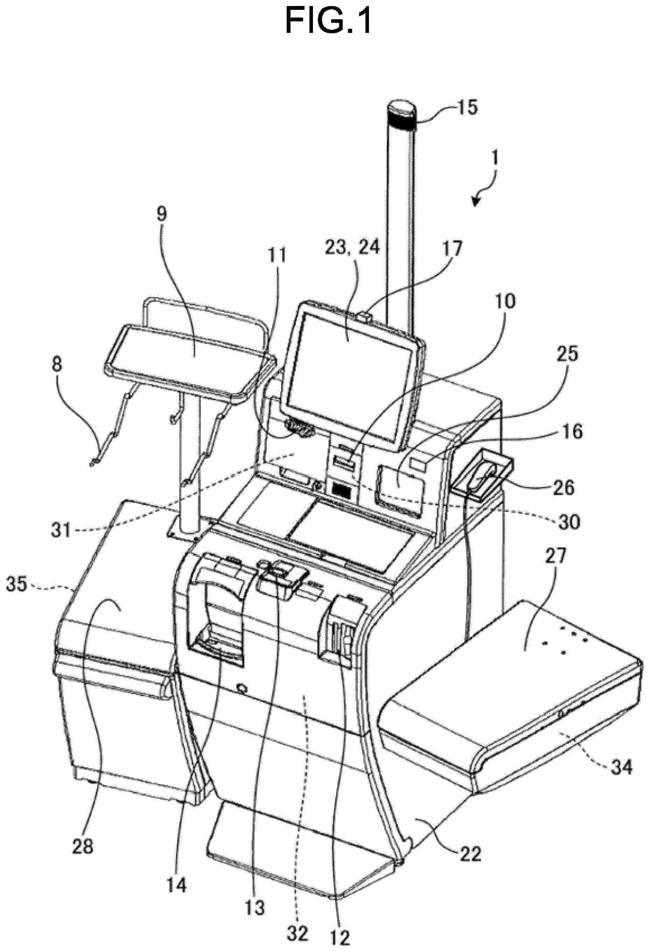

Fig. 1 is a perspective view illustrating an external appearance of a self-service POS terminal 1 according to an embodiment. A main body 22 of the self-service POS terminal 1 includes a display 24, a scanner 25 and a hand-held scanner 26. On the surface of the display 24, a touch panel 23 is arranged.

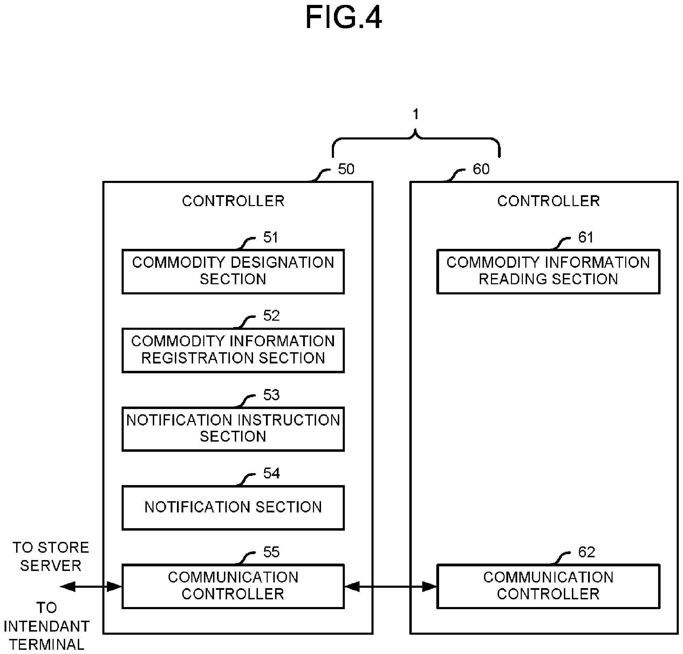

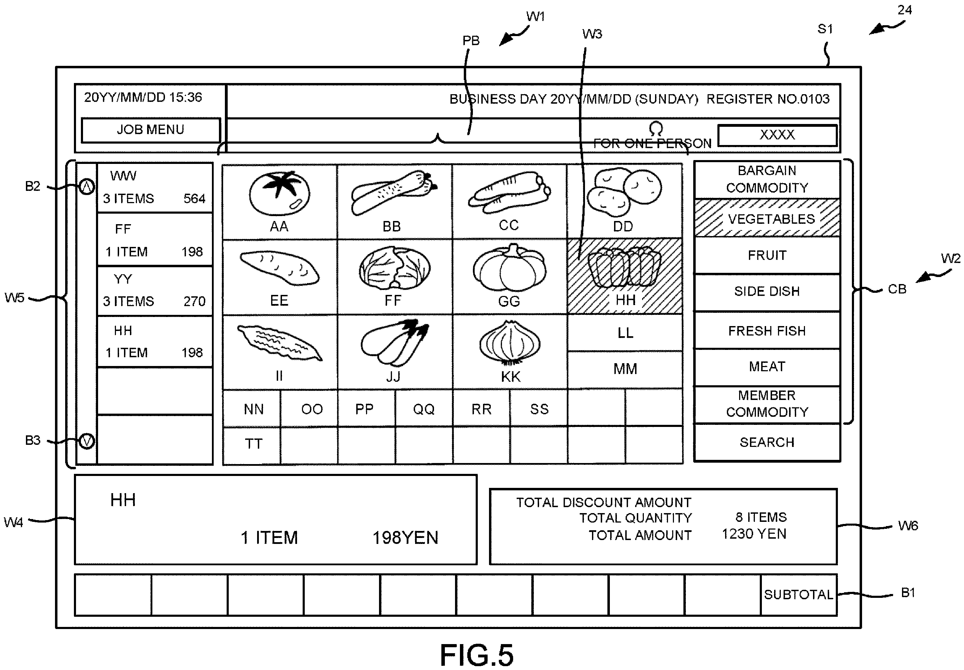

The display 24 is, for example, a liquid crystal display. The display 24 can display a guide screen or the like for informing a customer about the operation methods of the self-service POS terminal 1. The display 24 displays a selection registration screen S1 (refer to Fig. 4) for registering a commodity by the selection of a commodity choice button associated with the commodity in advance. The display 24 displays a reading registration screen S2 (refer to Fig. 5) which displays the commodity information registered by reading a code symbol attached to the commodity by the scanner 25 or the hand-held scanner 26. The display 24 displays a total amount of commodities, a deposit amount, a change amount, etc., and displays a checkout screen or the like for allowing the customer to select a payment method.

The scanner 25 or the hand-held scanner 26 reads a code symbol such as a barcode or a two-dimensional code attached to the commodity. The scanner 25 includes, for example, an optical image capturing element such as a CCD (Charge Coupled Device) or a CMOS (Complementary Metal Oxide Semiconductor). The scanner 25 images of items placed in an image capturing region in front of a reading window. The customer holds the code symbol attached to the commodity to the reading window of the scanner 25 and the scanner 25 reads the code symbol. It may be difficult to hold a code symbol attached to some commodities such as a large cardboard box or a long commodity over the reading window of scanner 25. In such a case, the customer uses the hand-held scanner 26 to read the code symbol. In the code symbol, coded information such as a JAN (Japanese Article Number) code or CODE 128 which can uniquely specify a commodity is encoded. The scanner 25 or the hand-held scanner 26 may further have a function of identifying a commodity by generic object recognition (object recognition).

In the vicinity of the reading window of the scanner 25, a light emitting section 16 is provided. For example, a LED (Light Emitting Diode) is built in the light emitting section 16, and the light emitting section 16 lights up over a predetermined period of time when the scanner 25 reads the code symbol attached to a commodity or when the code reading result is registered. The light emitting section 16 lights up over a predetermined period of time when a customer registers a commodity using the selection registration screen described above. The light emitting section 16 is not limited to being installed in the vicinity of the reading window of the scanner 25. For example, instead of the light emitting section 16, a light emitting section 17 having the same function as the light emitting section 16 may be installed above the display 24. The light emitting section 16 and the light emitting section 17 are each an example of an illumination module.

Since the light emitting section 17 is installed at a higher position than the light emitting section 16, a store clerk, who is monitoring a state of the self-service POS terminal 1, can also be made aware of the illumination state as well the customer who operates the self-service POS terminal 1. In some examples, the light emitting section 16 may also or instead be installed in an attendant terminal that monitors operation states of a plurality of self-service POS terminals 1 in addition to the vicinity of the reading window of the scanner 25. In other words, a store clerk monitoring the operation state of the self-service POS terminal 1 may monitor a light emission state of the light emitting section 16.

On the right side of the main body 22, a commodity placement table 27 on which a customer generally places an unsettled/unregistered commodity items is provided. The unsettled/unregistered commodity items may be in a shopping basket when placed on the commodity placement table 27. On the left side of the main body 22, a commodity placement table 28 on which the customer is to place a settled/registered commodity item is provided. Above the commodity placement table 28, a bag hook 8 for hanging a bag in which settled/registered commodity items may be placed, and a temporary placement table 9 on which the customer may temporarily place settled/registered commodity items before bagging or the like are provided. The commodity placement table 27 has a weighing machine (scale) 34 therein, and the commodity placement table 28 has a weighing machine (scale) 35 therein. The self-service POS terminal 1 is configured to output an error message when the total weight of the commodities before commodity registration and after the commodity registration are different by some predetermined amount or percentage.

The main body 22 is provided with a card reader 30 for reading a rewards points card or a credit card of the customer. For settlement, the card reader 30 reads a point card or a credit card inserted in a card insertion slot 10. The main body 22 is provided with a receipt printer 31 for printing a receipt. The receipt printed by the receipt printer 31 is issued from a receipt issuing port 11.

In the main body 22, a deposit and dispensing device 32 which calculates an amount of bills and coins deposited by the customer at the time of settlement and dispenses bills or coins as a change as necessary is provided. The customer deposits bills for settlement and receives bills as the change via a bill deposit and dispensing port 12. The customer inserts coins via a coin insertion slot 13 and receives coins as the change from a coin outlet 14.

Furthermore, a pole is provided on an upper surface of the main body 22. At the upper end of the pole, a warning light 15 that lights up when there is an abnormality in an operation performed at the self-service POS terminal 1 or when a store clerk is requested is provided.

### (Description of Hardware Configuration of Self-service POS Terminal)

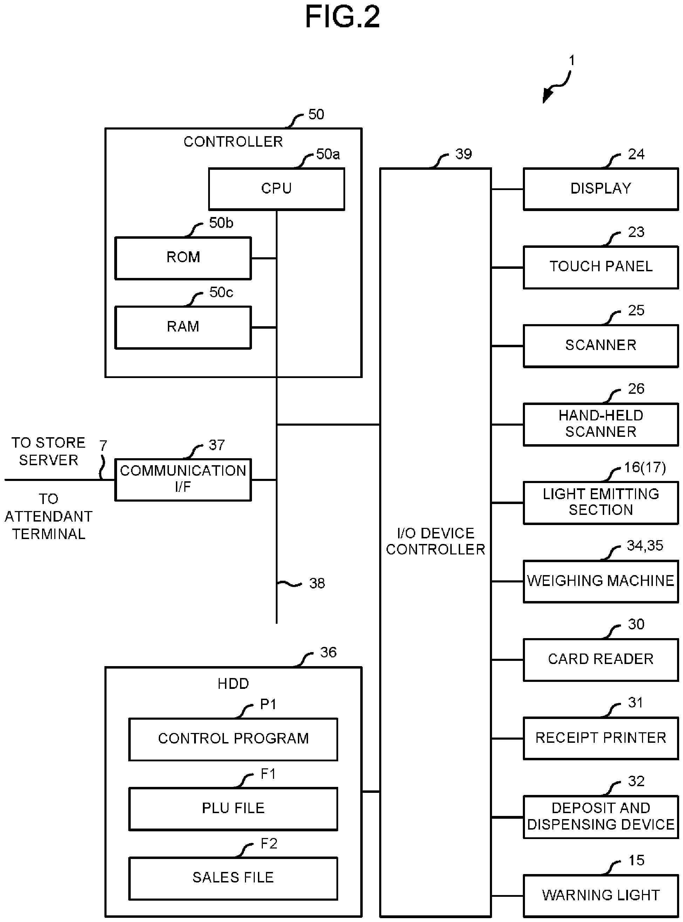

Fig. 2 is a hardware block diagram illustrating an example of the hardware configuration of the self-service POS terminal 1. The self-service POS terminal 1 includes a controller 50 having a computer configuration including a CPU 50a (Central Processing Unit), a ROM 50b (Read Only Memory) and a RAM 50c (Random Access Memory) . The ROM 50b stores various programs to be executed by the CPU 50a, various fixed data, and the like. The RAM 50c temporarily stores data and programs when the CPU 50a executes various programs. The RAM 50c stores sales data indicating sales record of a commodity, various screen display data displayed on the display 24 and the like.

The controller 50 is connected to I/O (Input/Output) devices such as the touch panel 23, the display 24, the scanner 25, the hand-held scanner 26, the light emitting section 16, the weighing machine 34, the weighing machine 35, the card reader 30, the receipt printer 31, the deposit and dispensing device 32, the warning light 15, an HDD (Hard Disk Drive) 36, and the like via a bus 38 and an I/O device controller 39. The controller 50 controls operations of the individual sections and more generally the entire system of the self-service POS terminal 1. The controller 50 may communicate with a store server and/or an attendant terminal (neither is shown) connected via a LAN (Local Area Network) 7 via a communication I/F (Interface) 37.

The touch panel 23, the display 24, the scanner 25, the hand-held scanner 26, the light emitting section 16, the weighing machine 34, the weighing machine 35, the card reader 30, the receipt printer 31, the deposit and dispensing device 32 and the warning light 15 are hardware that realizes the particular functions described above.

The HDD 36 stores a control program P1, a PLU (price look-up) file F1, and a sales file F2.

The control program P1 is used for controlling the overall operation of the self-service POS terminal 1. The control program P1 may be provided by being incorporated in the ROM 50b in advance. The control program P1 may be provided by being recorded in a non-transitory computer-readable recording medium such as a CD-ROM (Compact Disc Read-Only Memory), a FD (Flexible Disk), a CD-R (Compact Disc Rewritable), a DVD (Digital Versatile Disc) or the like as a file that can be installed in or executed by the controller 50. Furthermore, the control program P1 may be stored on a computer connected to a network such as the Internet and may be provided by being downloaded via the network. The control program P1 may be provided or distributed via the network such as the Internet.

The PLU file F1 stores code information such as a JAN code uniquely assigned to each commodity type for sale at the store in association with particular commodity information such as a name, a price, or a commodity classification for the commodity. In a case in which the self-service POS terminal 1 specifies a commodity by the generic object recognition, the PLU file F1 further stores feature value information and/or a reference image of each commodity. The feature value information relates to a color of the commodity a surface texture of the commodity, or the like which can be read from the reference image for the commodity and compared to captured images for purposes of recognizing a commodity for registration.

The sales file F2 stores commodity registration information generated when the self-service POS terminal 1 performs commodity registration processing.

### (Description of Hardware Configuration of Scanner)

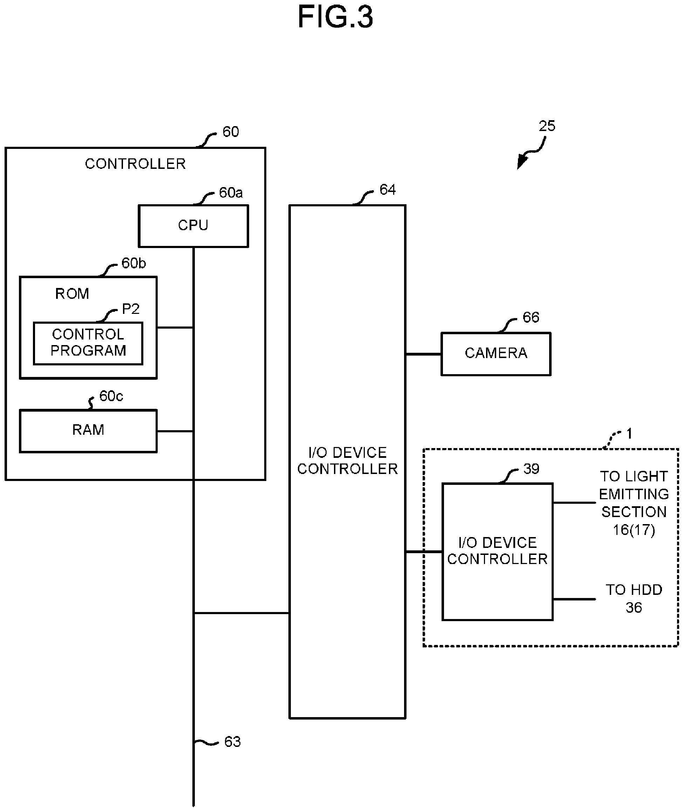

Fig. 3 is a hardware block diagram illustrating an example of the hardware configuration of the scanner 25. The scanner 25 includes a controller 60 having a computer configuration composed of a CPU 60a, a ROM 60b and a RAM 60c. The ROM 60b stores a control program P2 to be executed by the CPU 60a, various fixed data, and the like. The RAM 60c temporarily stores data and programs when the CPU 60a executes the control program P2.

The controller 60 is connected, via a bus 63 and an I/O device controller 64, to an I/O device such as a camera 66, and the light emitting section 16 (or light emitting section 17) and the HDD 36 via the I/O device controller 39 of the self-service POS terminal 1. The controller 60 controls the operations of each section to control the scanner 25.

The camera 66 is installed behind the reading window to face out of the reading window. The camera 66 photographs a commodity held over the reading window.

Although not shown in a drawing, the hand-held scanner 26 also has the same hardware configuration as the scanner 25.

### (Description of Functional Components of Self-service POS Terminal)

Fig. 4 is a functional block diagram illustrating an example of the functional components of the self-service POS terminal 1.

As shown in Fig. 4, the self-service POS terminal 1 of the present embodiment when executing the control program P1 has a configuration including a commodity designation section 51, a commodity information registration section 52, a notification instruction section 53, a notification section 54, and a communication controller 55. The CPU 50a reads out the control program P1 from the HDD 36, copies or loads it on the RAM 50b and executes it to generate the functional components shown in Fig. 4 as modules within the controller 50. In addition to this, a functional module for controlling each I/O device shown in Fig. 2 is also generated in the controller 50, but here only those functional components relevant to operations during registering a commodity are particularly described.

The scanner 25 executes the control program P2 and has a functional configuration including a commodity information reading section 61 and a communication controller 62. The CPU 60a reads out the control program P2 from the ROM 66b, copies or loads it on the RAM 60b and executes it to generate the functional components shown in Fig. 4 as modules in the controller 60.

The commodity designation section 51 generates a selection registration screen (refer to Fig. 5) and displays it on the display 24. The commodity designation section 51 receives a customer selection of a commodity being purchased from the selection registration screen. The commodity designation section 51 reads out the commodity information from the PLU file F1 stored in the HDD 36 for the commodity selected by the customer. The commodity designation section 51 is an example of a designation module.

The commodity information registration section 52 performs registers the commodity information for the commodity designated by the commodity designation section 51 in the sales file F2 stored in the HDD 36. The commodity information registration section 52 registers the commodity information read by the commodity information reading section 61 in the sales file F2. The commodity information registration section 52 is an example of a registration module.

The notification instruction section 53 instructs the notification section 54 to signal that the commodity information has been registered when the commodity information is registered by the commodity information registration section 52. The notification instruction section 53 determines whether a predetermined period of has time elapsed since the notification section 54 was instructed to signal that the commodity information was registered. The notification instruction section 53 is an example of a notification instruction module.

The notification section 54 notifies that a commodity has been registered by a selection operation performed by the customer on the selection registration screen or by the reading of a code symbol using the scanner 25 (or hand-held scanner 26) . Specifically, the notification section 54 issues a notification by causing the light emitting section 16 (and/or light emitting section 17) (refer to Fig. 2) to emit the light. The notification section 54 is an example of a notification module.

The communication controller 55 receives the commodity information as read by the scanner 25 from the communication controller 62 of the controller 60. The communication controller 55 transmits the sales file F2 to the store server and the attendant terminal. Furthermore, the communication controller 55 receives updated information for the PLU file F1 from the store server.

The commodity information reading section 61 reads the commodity information for the commodity scanned by scanner 25. The commodity information reading section 61 is an example of a designation module.

The communication controller 62 transmits the commodity information read to the communication controller 55 of the controller 50.

### (Description of Selection Registration Screen)

Next, with reference to Fig. 5, a selection registration screen S1 is described. The selection registration screen S1 is displayed on the display 24 when registering a commodity lacking an attached code symbol such as a barcode. Fig. 5 is a diagram illustrating one example of the selection registration screen S1 displayed at the time of registering the commodity for selecting the commodity from among various possible matches.

On the selection registration screen S1, a commodity display window W1, a commodity category display window W2, a commodity information display window W4, a registered commodity information display window W5, a total amount display window W6, a subtotal button B1, and page turning buttons B2 and B3 are displayed.

In the commodity display window W1, a plurality of buttons PB corresponding to selectable commodities is displayed. The customer selects a particular commodity from among the displayed options by operating (pressing) the button PB matching the commodity being purchased. That the button PB changes color when pressed, as shown as a selected commodity display W3 in Fig. 5.

In the commodity category display window W2, a plurality of category buttons CB is displayed for permitting the selection of different commodity categories to be displayed in the commodity display window W1. Fig. 5 shows a state in which a category button CB corresponding to the category of vegetables has been selected in the commodity category display window W2. The selection of the vegetables category is indicated by changing a color of the category button CB for vegetables.

In the commodity information display window W4, the commodity information for the particular commodity just selected by the customer is displayed.

In the registered commodity information display window W5, the commodity information for the items already registered by the customer is displayed. The page turning buttons B2 and B3 are used for scrolling the registered commodity information display window W5 when the quantity of registered commodity is too large to fit in the registered commodity information display window W5 at once. If the page turning button B2 is pressed, the registered commodity information display window W5 is scrolled down by one line. If the page turning button B3 is pressed, the registered commodity information display window W5 is scrolled up by one line.

In the total amount display window W6, a purchase quantity (total number of items) and a total amount due for commodities already registered are displayed.

The subtotal button B1 is used for signaling the self-service POS terminal 1 that the commodity registration has been completed.

### (Description of Reading Registration Screen)

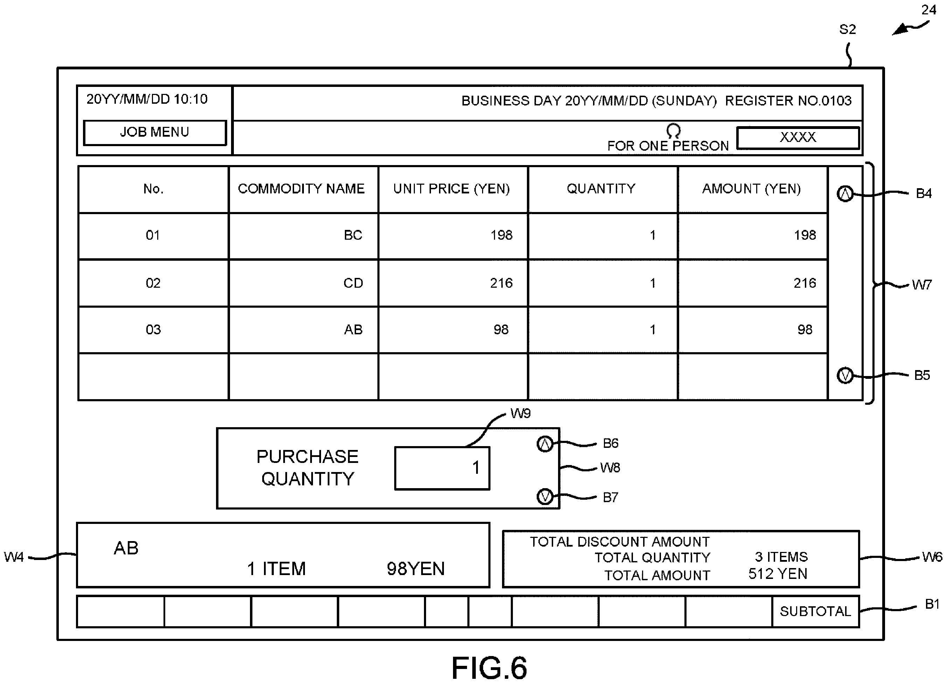

Next, referring to Fig. 6, the reading registration screen S2 is described. The reading registration screen S2 is displayed on the display 24 when a commodity to which a code symbol such as the barcode is registered by the scanner 25 or the hand-held scanner 26. Fig. 6 is a diagram illustrating one example of the reading registration screen S2 displayed when a code symbol is read.

In the reading registration screen S2, the commodity information display window W4, the total amount display window W6, a registered commodity information display window W7, a purchase quantity indication window W8, a purchase quantity display window W9, the subtotal button B1, page turning buttons B4 and B5, a purchase quantity addition button B6, and a purchase quantity subtraction button B7 are displayed.

In the commodity information display window W4, the commodity information associated with the code symbol most recently read by the customer is displayed.

In the total amount display window W6, the purchase quantity (number of items) and the total amount due for commodities already registered are displayed.

In the registered commodity information display window W7, the commodity information for already registered items is displayed. Commodity information is displayed in the registered commodity information display window W7 for those commodities registered by scanning a code symbol and commodities registered by selection of a button PB from the selection registration screen. The page turning buttons B4 and B5 are used for scrolling up and down the registered commodity information display window W7 when the quantity of the registered commodity is large. If the page turning button B4 is pressed, the registered commodity information display window W7 is scrolled down by one line. If the page turning button B5 is pressed, the registered commodity information display window W7 is scrolled up by one line.

In the purchase quantity indication window W8, is used for setting the purchase quantity of one type of commodity. In the purchase quantity display window W9, the purchase quantity set by the customer is displayed. The purchase quantity addition button B6 and the purchase quantity subtraction button B7 are pressed as many times as necessary to set the purchase quantity displayed in the purchase quantity display window W9.

Pressing the subtotal button B1 signals the self-service POS terminal 1 that the commodity registration is completed(refer to Fig. 5).

### (Registration Processing)

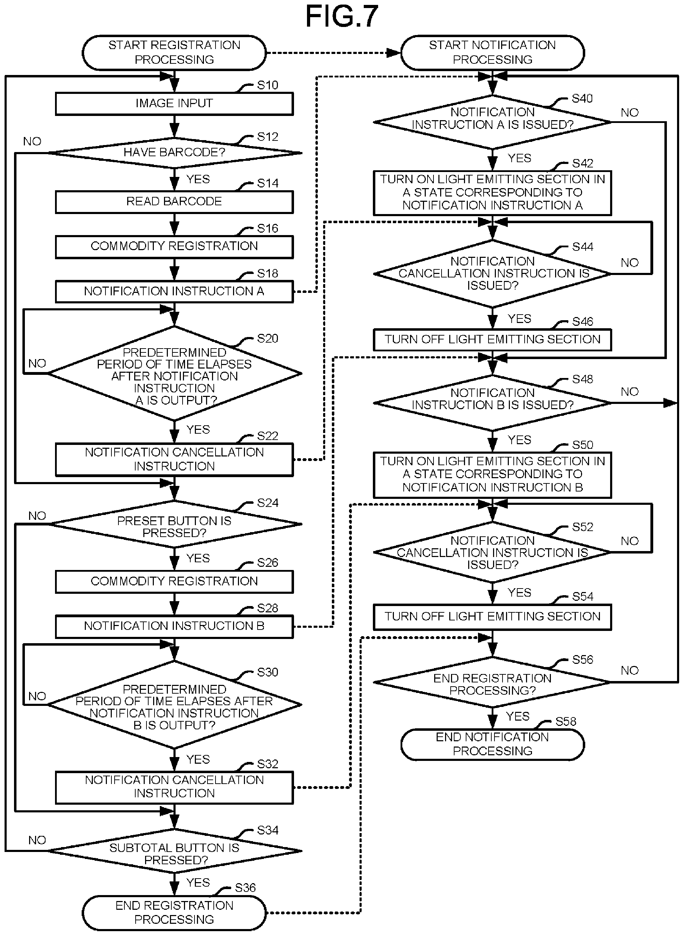

The self-service POS terminal 1 concurrently performs registration processing for each registering of a commodity and a notification processing for signaling that the commodity has been registered each time a commodity is registered. Fig. 7 is a flowchart depicting flows of the registration processing and the notification processing performed by the self-service POS terminal 1 according to an embodiment.

The commodity information registration section 52 of the self-service POS terminal 1 detects, for example, that a commodity registration option has been selected from a main menu screen displayed on the display 24, and starts the commodity registration processing.

First, the commodity information reading section 61 controls the scanner 25 to perform image input (image capturing) (Act S10). If the hand-held scanner 26 is operated, the hand-held scanner 26 performs the image input instead of the scanner 25, but in the following description, only a case in which the scanner 25 is used is described.

The commodity information reading section 61 processes a captured image from scanner 25 to detect a barcode. Then, the commodity information reading section 61 determines whether the barcode has been detected (Act S12). If it is determined that the barcode is detected (Yes in Act S12), the flow proceeds to the processing in Act S14. On the other hand, if it is determined that the barcode is not detected (No in Act S12), the flow proceeds to the processing in Act S24.

If Yes is determined in Act S12, the commodity information reading section 61 reads the code information such as the JAN code encoded in the barcode in Act S14.

Next, the commodity information registration section 52 registers the commodity for which the code information has been read (Act S16).

The notification instruction section 53 outputs a notification instruction A to the notification section 54 (Act S18). The notification instruction A is used to notify that a commodity registration has been performed by the reading (scanning) of code information. For example, the notification instruction A enables or causes the light emitting section 16 (or light emitting section 17) to emit blue light.

The notification instruction section 53 determines whether a predetermined period of time has elapsed since the notification instruction A was output (Act S20). If it is determined that the predetermined period of time elapses (Yes in Act S20), the flow proceeds to the processing in Act S22. On the other hand, if it is determined that the predetermined period of time has not elapsed (No in Act S20), the determination in Act S20 is repeatedly executed. The predetermined period of time is set to 0.5 seconds, for example.

If Yes is determined in Act S20, the notification instruction section 53 issues, in Act S22, an instruction to cancel the notification instruction A to the notification section 54.

Next, the commodity designation section 51 determines whether a button PB has been pressed in the selection registration screen S1 (Act S24). If No is determined in Act S12, the processing in Act S24 is also executed.

Although not specifically depicted in the flowchart in Fig. 7, the selection registration screen S1 is displayed when the commodity information registration section 52 detects that the commodity registration option permitting user selections of preset commodity choices was selected from the main menu screen or the like previously displayed on the display 24 before the start of registration processing.

In Act S24, if it is determined that a button PB is pressed (Yes in Act S24), the flow proceeds to the processing in Act S26. On the other hand, if it is determined that the button PB is not pressed (No in Act S24), the flow proceeds to the processing in Act S34.

If it is determined Yes in Act S24, in Act S26, the commodity information registration section 52 registers the commodity associated with the pressed button PB (Act S26).

The notification instruction section 53 outputs a notification instruction B to the notification section 54 (Act S28). The notification instruction B is used to signal that a commodity registration has been performed by the selecting of a button PB. For example, the notification instruction B enables or causes the light emitting section 16 (or light emitting section 17) to emit green light. In other words, the notification instruction A and the notification instruction B provide notifications/signals in different formats (e.g., different lamp colors or otherwise).

The notification instruction section 53 determines whether a predetermined period of time has elapsed since the notification instruction B was output (Act S30). If it is determined that the predetermined period of time elapses (Yes in Act S30), the flow proceeds to the processing in Act S32. On the other hand, if it is determined that the predetermined period of time has not elapsed (No in Act S30), the determination in Act S30 is repeatedly executed. The predetermined period of time is set to 0.5 seconds, for example.

If Yes is determined in Act S30, the notification instruction section 53 issues, in Act S32, an instruction to cancel the notification instruction B to the notification section 54.

Next, the commodity information registration section 52 determines whether the subtotal button B1 has been pressed (Act S34). If No is determined in Act S24, the processing in Act S34 is also executed.

In Act S34, if it is determined that the subtotal button B1 has been pressed (Yes in Act S34), the flow proceeds to the processing in Act S36. On the other hand, if it is determined that the subtotal button B1 has not been pressed (No in Act S34, the flow returns to the processing in Act S10.

If Yes is determined in Act S34, the commodity information reading section 61 terminates the registration processing in Act S36. Although not specifically shown in Fig. 7, the self-service POS terminal 1 next instructs the customer to perform settlement processing for settling the registered items in the transaction.

In Fig. 7, the commodity registration code symbol scanning is performed first, and then the commodity registration by selections of a button PB is performed. However, the order thereof may be reversed in other examples. Likewise, the commodity registration by scanning and the commodity registration button PB selecting may be repeated any number of times in a random order including multiple switches back and forth between the different commodity registration methods.

### (Description of Flow of Notification Processing)

Next, a flow of the notification processing is described with reference to Fig. 7 as well. If the commodity information registration section 52 of the self-service POS terminal 1 starts the commodity registration processing, the notification section 54 also starts the notification processing.

The notification section 54 determines whether the notification instruction A has been issued (Act S40) . If it is determined that the notification instruction A has been issued (Yes in Act S40), the flow proceeds to the processing in Act S42. On the other hand, if it is determined that the notification instruction A has not been issued (No in Act S40), the flow proceeds to the processing in Act S48.

If Yes is determined in Act S40, the notification section 54 turns on the light emitting section 16 (or light emitting section 17) in Act S42.

Subsequently, the notification section 54 determines whether the notification cancellation instruction has been issued (Act S44). If it is determined that the notification cancellation instruction has been issued (Yes in Act S44), the flow proceeds to the processing in Act S46. On the other hand, if it is determined that the notification cancellation instruction has not been issued (No in Act S44), the processing in Act S44 is repeated.

If Yes is determined in Act S44, the notification section 54 turns off the light emitting section 16 (or light emitting section 17) in Act S46.

The notification section 54 determines whether the notification instruction B has been issued (Act S48). If it is determined that the notification instruction B has been issued (Yes in Act S48), the flow proceeds to the processing in Act S50. On the other hand, if it is determined that the notification instruction B has not been issued (No in Act S48), the flow returns to the processing in Act S40.

If Yes is determined in Act S48, the notification section 54 turns on the light emitting section 16 (or 17) in Act S50.

Subsequently, the notification section 54 determines whether the notification cancellation instruction has been issued (Act S52). If it is determined that the notification cancellation instruction has been issued (Yes in Act S52), the flow proceeds to the processing in Act S54. On the other hand, if it is determined that the notification cancellation instruction has not been issued (No in Act S52), the processing in Act S52 is repeated.

If it is determined as Yes in Act S52, the notification section 54 turns off the light emitting section 16 (or light emitting section 17) in the Act S54.

Next, the notification section 54 determines whether the registration processing has terminated (Act S56). If it is determined that the registration processing has been terminated (Yes in Act S56), the flow proceeds to the processing in Act S58. On the other hand, if it is determined that the registration process is not terminated (No in Act S56), the flow returns to the processing in Act S40.

If Yes is determined in Act S56, the notification section 54 terminates the notification processing in Act S58.

As described above, in the self-service POS terminal 1 of an embodiment), when the commodity information registration section 52 registers the commodity information of a commodity designated by the commodity designation section 51 or a commodity read by the commodity information reading section 61, the notification instruction section 53 instructs the notification section 54 to signal that the commodity information has been registered. Therefore, since the customer knows that notification is performed when the commodity selected by himself/herself is registered, it is possible to reduce the likelihood of fraudulent commodity registrations performed through unfair operation.

In the self-service POS terminal 1, when selection of a button PB associated with a commodity is detected, the commodity designation section 51 designates the commodity associated with the button PB. Alternatively, the commodity information reading section 61 designates a commodity when a code symbol including the code information for uniquely specifying the commodity is read. The commodity information registration section 52 registers the commodity information of the designated commodity. Therefore, the notification instruction section 53 can signal that the commodity information has been registered regardless of the input method used for registering the commodity.

In the self-service POS terminal 1, the notification instruction section 53 instructs the notification section 54) to perform notification in different notification forms depending on whether the commodity designation section 51 designates the commodity by detecting the operation on a button PB or the commodity information reading section 61 designates the commodity by scanning a code symbol. Therefore, since notifications are performed by different methods when different registration input methods are used, it is difficult for the customer to perform an unfair operation considering that all registration operations performed by himself/herself are monitored by output of notifications.

In the self-service POS terminal 1, the notification section 54 includes at least one illumination module, such as light emitting section 16 or light emitting section 17, which is attached to the commodity information registration section 52 or the commodity information reading section 61. An illumination module may also be installed in an attendant terminal separated from the self-service POS terminal 1 and used to monitor the operation state of the self-service POS terminal 1. Therefore, a clerk can monitor the commodity registration process at the self-service POS terminal 1, for example, to detect whether a customer is puzzled about the registration operation.

In the self-service POS terminal 1, the notification instruction section 53 instructs the notification section 54 to make a notification for a predetermined period of time. Therefore, the customer can reliably recognize that the commodity has been registered.

The control programs (control programs P1 and P2) executed by the controller 50 or controller 60 may be stored in the HDD 36 or ROM 60b, respectively, or may be provided by being recorded in a non-transitory computer-readable recording medium such as a CD-ROM (compact disc read-only memory), a FD (Flexible Disk), a CD-R (Compact Disc Rewritable), a DVD (Digital Versatile Disk) and the like in the form of installable or executable file. These control programs may be stored in a computer connected to a network and provided by being downloaded via the network. These control programs) may be distributed via the network such as the Internet.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions and changes in the form of the embodiments described herein may be made without departing from the scope of the present disclosure. The accompanying claims and their equivalents are intended to cover such forms or modifications as would fall within the scope of the present disclosure.

## Claims

1. A commodity registration apparatus, comprising:
a commodity reader configured to identify a code symbol on an item;
a commodity designation module providing a display screen including a plurality of buttons corresponding to items lacking a code symbol;
a registration module configured to register items according to code symbols identified by the commodity reader or as designated by a selection of a button from the plurality of buttons provided on the display screen by the commodity designation module; and
a notification instruction module configured to instruct a notification module to signal a registration of commodity information for each item registered by the registration module.

2. The commodity registration apparatus according to claim 1, wherein the notification module is configured to signal in a different format according to whether the registration module registers an item according to code symbol identified by the commodity reader or designated by selection of a button in the plurality of buttons on the display screen.

3. The commodity registration apparatus according to claim 2, wherein
- the notification module comprises an illumination module on the commodity registration apparatus and the different format is a different illumination color for the illumination module, or wherein
- the notification module comprises an illumination module disposed on an attendant apparatus spaced from the commodity registration apparatus and the different format is a different illumination color for the illumination module.

4. The commodity registration apparatus according to any of claims 1 to 3, wherein the notification module comprises at least one amongst an illumination module on the commodity registration apparatus and an illumination module disposed on an attendant apparatus spaced from the commodity registration apparatus.

5. The commodity registration apparatus according to any of claims 1 to 4, wherein the notification instruction module instructs the notification module to maintain the signal for a predetermined period of time.

6. The commodity registration apparatus according to any of claims 1 to 5, wherein the commodity reader is one amongst a fixed scanner and a hand-held scanner.

7. The commodity registration apparatus according to any of claims 1 to 6, wherein the commodity designation module comprises:
a touch panel on the display screen; and
a storage device storing a predetermined list of items lacking a code symbol.

8. The commodity registration apparatus according to any of claims 1 to 7, wherein the plurality of buttons are provided on the display screen according to a generic objection recognition processing performed on an image of an item captured by the commodity reader.

9. A self-service point of sale terminal for registering items, comprising:
a commodity reader configured to identify a code symbol on an item in a sales transaction;
a display including a touch panel; and
a controller configured to:
display a display screen on the display, the display screen including a plurality of buttons corresponding to items lacking a code symbol;
register items in the sales transaction according to code symbols identified by the commodity reader or according to a user selection of a button from the plurality of buttons; and
output a notification signal for each registration of an item in the sales transaction.

10. The self-service point of sale terminal according to claim 9, further comprising:
an illumination module configured to receive the notification signal and illuminate according to the notification signal
wherein preferably the notification signal specifies whether the item in the registration was identified by the commodity reader or designated by the user selection of a button and the illumination module illuminates with a different color according to whether the item in the registration was identified by the commodity reader or designated by the user selection of a button.

11. The self-service point of sale terminal according to claim 9 or 10, wherein the notification signal specifies whether the item in the registration was identified by the commodity reader or designated by the user selection of a button.

12. The self-service point of sale terminal any of according to claims 9 to 11, wherein the notification signal is supplied to an attendant terminal via a network connection.

13. The self-service point of sale terminal according to any of claims 9 to 12, further comprising:
a light emitting section mounted on a pole, wherein the notification signal causes a lamp on the commodity reader to illuminate and a lamp of the light emitting section to illuminate.

14. A method for registering items in a sales transaction, comprising:
registering an item in a sales transaction using a commodity reader to identify a code symbol on the item or receiving a user selection to designate the item via a display screen including a plurality of buttons corresponding to items lacking a code symbol; and
instructing a notification module to signal a registration of commodity information for each item registered by the registration module.

15. The method according to claim 14, wherein the notification module comprises a lamp,
wherein preferably the color emitted by the lamp is different according to whether the item is registered using the commodity reader or by user selection via the display screen.
